# EUROPEAN PATENT APPLICATION

(11) **EP 2 546 667 A1**
(43) Date of publication of application: **16.01.2013**
(21) Application number: 11005718.9
(22) Date of filing: 13.07.2011
(51) Int. Cl.: G01R 31/26, G01R 31/40

(54) **Method for characterizing large area thin film photovoltaic devices**

(71) Applicant: Randhahn, Jean, 8892 Berschis (CH)
(72) Inventor: Randhahn, Jean, 8892 Berschis (CH)

(57) **Abstract**

A method for characterizing thin film photovoltaic devices on large substrates using several narrow band illuminations in several I-V measurements sequentially or partially mixed and compare one or multiple electrical values of such obtained I-V measurements to obtain characteristic TF PV device parameters of one or multiple partial or full TF PV devices on one or multiple substrates and to characterize TF PV device production processes.

## Description

### Background of the Invention

### Field of the Invention

The present invention relates to characterization of thin film photovoltaic 5 devices and characterization of processes to obtain such devices.

### Description of the Related Art

Traditionally photovoltaic ('PV') devices for generating electric power are produced using crystalline or poly-crystalline silicon base material. They offer high light to electrical power conversion efficiencies. Furthermore the production process is somewhat related to the very well known 15 processes used in semiconductor production. While obtaining high conversion efficiencies the production process is cost intensive and competes for material resources used in related 20 technologies like integrated circuit production. Crystalline and poly-crystalline devices are limited in size due to their production process. For this reason PV modules comprise of several PV devices to 25 obtain PV module sizes fit for power generation installations.

In recent years thin film ('TF') technologies have been successfully employed to obtain photovoltaic devices. Unlike the crystalline 30 PV devices, thin film PV devices include a light-absorbing semiconductor formed from materials with less stringent processing requirements such as amorphous silicon, chalcopyrites or other polycrystalline 35 materials. TF devices are obtained by depositing several functional layers on a substrate and structuring those to form device interconnections. Because single crystal semiconductor material is not 40 required, the light absorbing semiconductor of TF PV devices can be obtained using large area deposition techniques. TF PV devices can form arrays on large substrates ranging well up to 4 m2 and more.

Although TF PV devices include more cost effective and readily-available materials, on average they do not produce as much electric energy as crystalline PV devices. Because of lower average output of individual TF PV devices compared to crystalline silicon PV devices, the arrays of TF PV devices are larger, in order to obtain comparable electrical output values like maximum power, current and voltage.

When such a large array of TF PV devices does not perform as expected it is often an imperfection in one or more of the individual TF PV devices. Such imperfections can be local or cover a partial area of the full substrate. They are due to suboptimal production process parameters, such as for example in the deposition and structuring processes. One imperfection found in many deposition processes is the non-uniformity of a parameter of the deposited layer that affects either conversion efficiency or losses within the TF PV device.

Many such imperfections can be characterized by typical electrical parameters derived from the spectral response ('SR') of the TF PV device and the current voltage ('I-V') characteristic. The spectral response is a measure of conversion of incident light to electrical current. It is measured by illuminating a very small fraction of a TF PV device with monochromatic light. The wavelength of the monochromatic light is swept through a wavelength region that is of interest for the TF PV device. This is typically but not limited to wavelengths in the visible and near infrared light. At each wavelength the short circuit current of the TF PV device is measured and related to the incident light power. The obtained spectral response is the spectral resolved conversion rate of light power to electrical current of a TF PV device. The SR measurement is always performed on small spots within TF PV devices of very small surface area, assuming that the small spot is representative for the small area of the TF PV device. The SR information is used to make quantitative judgments on TF PV device performance. Many specific device properties can be deducted from value and shape of the SR, for example short circuit current density by mathematically integrating the SR over a wavelength region of interest and sensitivity to certain light spectral ranges.

Since the SR is the spectral resolved conversion rate of light power to electrical current it is one of the predominant tools to judge and improve TF PV device efficiency. Typically it is of great technological interest to increase the SR in the spectral band of sunlight. Since the SR is affected by TF PV device composition it is of interest to produce identical and higly efficient TF PV device compositions. The TF PV device composition is the output of the TF PV device production processes.

Therefore it is of great technological interest to characterize the TF PV device production processes. Since TF PV device production makes use of large area deposition techniques the obtained TF PV device composition is affected by the spatial uniformity of the deposition process output. Spatial non-uniformities in any of the deposited layers contribute to nonuniform TF PV device properties on one or more substrates. Such differences in TF PV devices composition lead to unfavorable differences in TF PV device performance.

The I-V characteristic yields typical device parameters such as short circuit current, short circuit current density, open circuit voltage, maximum power point and others. They allow exact judgment on light absorption efficiency of the TF PV device. The I-V characteristic is commonly obtained using sun simulators conforming to IEC 60904. The measurement takes place by illuminating the TF PV device or module by light with a spectral characteristic near to sun light. Sun light features a broad continuous light spectrum. While illuminated the TF PV device or module is driven in current or voltage. Meanwhile current and voltage of the TF PV device or module are recorded. This measurement is typically performed on single TF PV devices and on TF PV modules.

Since a broad spectrum light source is used in sun simulators the resulting I-V characteristic represents a combination of the full spectral sensitivity of the TF PV device and the used broad light spectrum. Therefore local declines or gains in SR and overall decline in SR of the TF PV device yield no or little differences in I-V characteristic of TF PV device in question. The same applies to I-V characterization using a monochromatic or narrow band light source. Local declines in SR cannot be differentiated from global decline in SR, since the TF PV device is illuminated at only one light wavelength or narrow band that it is sensitive to. Therefore such I-V characterizations of TF PV devices are of limited use to characterize differences in SR due to TF PV device composition differences.

Since TF PV device are obtained using large area processing techniques, for example layer deposition, scribing, thermal activation, they are affected by the production process stability and process output uniformity. It is therefore of great technological interest to characterize TF PV devices on large substrates. Characterization by measuring I-V characteristic is limited as described above due to insensitivity. Characterization by SR measurement is limited due to its restriction to small illuminated areas and the therefore excessive amount of time required characterizing TF PV devices on large substrates.

Accordingly, there is a need in the art for a method for characterizing TF PV devices collectively forming a TF PV module. The method can differentiate local and global declines and gains in SR TF PV devices on large area substrates.

### Description of the Invention

It is an object of the present invention to ameliorate at least some of the disadvantages of the above methods and to provide an improved method for characterizing TF PV devices and the processes of obtaining such.

The present invention provides a method for characterizing an area or full area of one or multiple TF PV devices, the method comprising illuminating the said TF PV devices with a narrow band light, measuring the full or partial I-V characteristics of said illuminated PV TF devices and doing so for at least two different narrow band lights. By choosing one or multiple electrical values of said full or partial I-V characteristics and comparing said values of any one I-V characteristic to said one or multiple values of any other I-V characteristic a quantitative information on the device performance is obtained. The information is somewhat spectrally resolved, depending on number and spectral properties of the light used during the measurements.

One example of usage of the method, but that the method is not limited to, is the characterization of the TF PV devices made from cadmium telluride type semiconductors and chalcopyrite type semiconductors regarding the cadmium sulfide layer used in such devices. The presence of a cadmium sulfide ('CdS') layer can be beneficial to the TF PV device conversion efficiency. Yet, the cadmium sulfide layer properties, for example its thickness, need to be of an optimal value depending on other TF PV device properties in order to obtain higher efficiencies. The difference in efficiency depending on the CdS layer properties can be characterized by common SR measurement, but only for very small areas within one TF PV device and without discrimination from other effects that affect device efficiency. The present invention allows for discrimination and larger device area characterization by comparing for example the short circuit current obtained at a light with spectral range where the device is most sensitive to the CdS layer properties variation, for example around a wavelength of 450 nm, to the short circuit current obtained at a light with spectral range where the device is least sensitive to CdS layer properties and other possibly present effects. The two short circuit currents can for example be used to compute a quantitative factor that represents the device efficiency due to the CdS layer properties.

This method can also be applied to multi junction TF PV devices which comprise at least two light converting semiconducting layers ('subdevice'). In such devices one subdevice can be characterized by the method of the present invention while illuminating the device with a light of spectral range that all other subdevices are sensitive to in order to allow current flow through the device. By additionally setting the irradiance of the multiple lights used in the present method for example in such a way that the TF PV subdevice of interest is the subdevice with the limiting electrical output discrimination of subdevices is improved.

In one example for a two junction device, where the first junction is sensitive to light of wavelengths below 700 nm and the second junction is sensitive to light of wavelengths above 500 nm, one or more lights of wavelengths below 500 nm with a total irradiance that causes a lower short circuit current density than the one or more lights for the second subdevice of wavelengths above 700 nm are used in conjunction with the present method. If performed with such a setup the short circuit current in the device is limited by the first subdevice due to its illumination. When choosing the short circuit current from the I-V measurements to characterize the subdevice the discrimination between first and second subdevice is higher due to the first subdevice limiting and therefore setting the short circuit current in the device.

Also the method can be applied to, but is not limited to, a portion of a TF PV device or the full area of a device. Furthermore the actions in the method can be performed simultaneously, sequentially or mixed on multiple devices on the same substrate, by illuminating multiple TF PV devices according to the invention and measuring the full or partial I-V characteristic of one or multiple of the illuminated devices. This yields a spatial resolved TF PV device characterization over the substrate.

When performing such measurements on devices on multiple substrates a spatial resolved characterization over multiple substrates is obtained. This is effectively a characterization of the spatial uniformity and a characterization over time or other process parameters that are changed over time of the processes used to obtain the TF PV device.

### Description of an Embodiment

To perform the method or parts of the method described in the present invention any sun simulator comprising at least:
1. a I-V measurement unit capable of partial or full I-V measurement, for example, but not limited to, cetisPV-CT-L1 by h.a.l.m. elektronik GmbH Germany,
2. a TF PV Device contacting unit for establishing partial or full contact to the TF PV device or devices of interest, for example but not limited to by means of metallic contact pins,
3. a modified light source, of which one example is described below
can be used.

The modified light source is located and mounted as is the light source in any common sun simulator and shall illuminate the TF PV devices partially or fully. The light source provides two or more narrow band illuminations that both illuminate the TF PV device independently. Each narrow band illumination may be realized by monochromatic light sources, inherent narrow band light sources such as light emitting diodes ('LED'), filtered broad band light sources such as xenon arc lamps or tungsten lamps or other suitable means. The first narrow band illumination realized for example by LEDs radiating at a center wavelength of 470 nm ("LED_470nm") and the second narrow band illumination realized by LEDs radiating at a center wavelength of 627 nm ("LED_627nm").

The light source and I-V measurement unit are controlled in such a way that two I-V measurements are performed. The first I-V measurement is performed while the TF PV devices are illuminated by illumination LED_470nm. The second I-V measurement is performed while the TF PV devices are illuminated by illumination LED_627nm. From the I-V measurements the short circuit currents are chosen and a ratio R between them is calculated as characterizing parameter. The obtained parameter R is a now a measure of TF PV device performance of short circuit current at a wavelength of 470 nm related to a short circuit current at a wavelength of 627 nm. This parameter is for example for TF PV devices comprising a cadmium sulfide layer a quality indicator for cadmium sulfide layer properties, such as layer thickness. A high value of the parameter R indicates a beneficial gain of SR in the region sensitive to cadmium sulfide layer properties which is around a wavelength of 470 nm.

When obtained on several TF PV devices on one substrate the set of the parameter R of each characterized TF PV device in this example yields the variation of cadmium sulfide layer properties effects on conversion efficiency. The variation is spatially distributed according to the spatial distribution of characterized devices. This information can be used to identify, monitor and adjust the process forming the cadmium sulfide layer by common process control means.

The same method performed on multiple substrates yields a variation of the R parameter sets over the characterized substrates. Since TF PV substrates can be processed at different times the invention enables also identification, monitoring and adjustment of the process parameters that affect process output over multiple TF PV substrates or time.

A similar embodiment comprising at least three narrow band illuminations can be used to characterize subdevices in multi junction TF PV devices. In that case the at least two parameters are obtained by forming ratios between the three obtained short circuit currents for each TF PV device.

Different electric outputs, different narrow band light sources wavelength range and different number of narrow band light sources yield further device properties. These can previously or by means of the present invention be determined.

## Claims

1. A method for characterizing an area or full area of one or multiple TF PV devices, the method comprising:
illuminating one or multiple TF PV devices with a narrow band light;
measuring the full or partial I-V characteristics of one or more illuminated PV TF devices;
repeating the acts of 'illuminating' and 'measuring' on the same TF PV devices using different narrow band lights once or multiple times;
choosing one or multiple electrical values of said full or partial I-V characteristics;
comparing said one or multiple values of any one I-V characteristic to said one or multiple values of any other I-V characteristic to characterize the TF PV device.

2. The method of claim (1) wherein:
the repeated actions of 'illuminating' and 'measuring' are performed in a step sequence where
one or multiple TF PV devices are illuminated by one narrow band light while measuring a portion of the I-V characteristic;
one or multiple TF PV devices are illuminated by another narrow band light while measuring a portion the I-V characteristic;
performing all said steps until a greater portion or the full I-V characteristic is obtained;
choosing one or multiple electrical values of said full or partial I-V characteristics;
comparing said one or multiple values of any one I-V characteristic to said one or multiple values of any other I-V characteristic to characterize the TF PV device.

3. The method of one of claim (1) and (2) wherein:
the TF PV device is illuminated at least partially.

4. The method of one of claim (1) and (2) wherein:
a narrow band light is monochromatic light or a light covering at least a portion of the spectrum that the TF PV device is able to convert into an electrical output.

5. The method of one of claim (1) and (2) wherein:
a TF PV device being a multi junction TF PV device consisting of several light converting semiconducting elements ('subdevice').

6. The method of one or more of claim (1), (2) and (5) wherein:
the not to be characterized TF PV subdevice is illuminated with light of a spectrum that the said TF PV subdevice can convert into an electrical output while performing at least the actions of 'illuminating' and 'measuring'.

7. The method of one or more of claim (1), (2), (5) and (6) wherein:
one narrow band light spectrum is chosen in a way that the emitted light can be converted into an electrical output by at least the to be characterized PV TF subdevice.

8. The method of one of claim (1) and (2) wherein:
obtaining properties according to (1) and comparing said properties of one device to another device on same substrate to identify variation between said TF PV devices.

9. The method of one of claim (1) and (2) wherein:
obtaining properties according to (1) and comparing said properties of one or more devices to one or more devices on different substrates to identify variation between said TF PV devices or substrates.

10. The method of one of claim (1) and (2) wherein:
the irradiance of any one said light is set to different or equal value of any other said light.

11. The method of one of claim (1) and (2) wherein:
multiple TF PV devices are all or a subset of TF PV devices or partial TF PV devices on one substrate.
